Europäisches Patentamt

European Patent Office

Office européen des brevets

(19)

(11) Publication number : **0 506 630 A1**

(12) **EUROPEAN PATENT APPLICATION**

(21) Application number : 92830146.4

(22) Date of filing : 25.03.92

(51) Int. Cl.⁵ : **B65G 57/24**

(30) Priority : **28.03.91 IT FI910066**

(43) Date of publication of application :
**30.09.92 Bulletin 92/40**

(84) Designated Contracting States :
**DE ES FR**

(71) Applicant : **COSTUZIONI MECCANICHE PARA
di Para Giovanni &C. S.n.c.
Via M. Sironi n.4
I-50040 Seano, Carmignano, Firenze (IT)**

(72) Inventor : **Para, Giovanni
Via F. Ferrucci n.335
I-50047 Prato, Firenze (IT)**

(74) Representative : **Mannucci, Gianfranco,
Dott.-Ing. et al
Ufficio Tecnico Ing. A. Mannucci Via della
Scala 4
I-50123 Firenze (IT)**

(54) **Apparatus for automatic palletization.**

(57)  An apparatus for the automatic palletization and disposition of articles of constant geometric form (such as parallelepiped packs) in layers and, if requested, on pallets or platforms, comprises in combination : roller conveyer means (20 ; 20A) or the like for the platforms ; means (20A) for lifting said platforms and progressively lowering them as they are gradually loaded with layers of articles ; a roller table (3) for feeding subsequent layers of articles ; means (9, 9A) for lifting and translating the individual layer ; means for pushing said layer of articles in the transverse direction and leaving it on the lifted platform which possibly supports layers which were previously received and were lowered together with the platform, said means being able to be withdrawn from below said layer ; and means for compacting the components of an individual layer.

FIG.1

EP 0 506 630 A1

The invention has the object to provide an apparatus for the formation of blocks of articles having constant geometric shape, with advantages of rapidity, automaticity, limited overall dimensions and versatility. These and other advantages will be evident from a reading of the following description.

Substantially, the apparatus according to the invention - in practice suitable for palletizing articles of constant geometric shape, such as parallelepiped packs, in layers, said articles likely to be already on pallets or platforms - comprises in combination:

– roller conveyer means or the like for conveying the platforms;

– means for lifting said platforms and progressively lowering them as they are gradually loaded with layers of articles;

– rollers for feeding subsequent layers of articles;

– means for lifting and translating the individual layer;

– means for pushing said layer of articles in the transverse direction and leaving it on the lifted platform which possibly supports layers which were previously received and lowered together with the platform, said means able to be withdrawn from below said layer; and

– means for compacting the components of an individual layer.

The means for lifting and translating the individual layer may comprise a cantilever-projecting rack-like support which is able to pass between the cantileverly supported rollers of a roller table, and chains or the like which are driven to move said rack-like support vertically and horizontally.

The means for transversally pushing the lifted layer of articles may comprise a translation fork having projecting arms which intersect the downwardly moving rack support to pick up the lifted and translated layer of articles.

Advantageously, the means for compacting the components of an individual layer in one direction comprise a wall acting on the arrival of the fed components, and a barrier for compacting said components in the orthogonal direction and able to intervene - especially by rotation - upon the reversal of the motion of the translation for after said layer has been transferred in the transverse direction.

The means for lifting and lowering a platform consist, in practice, of a portion of roller table which provides also for moving away the loaded platform.

The invention will be better understood by following the description and attached drawing, which shows a practical, not limiting example of the same invention. In the drawing:

Fig. 1 shows a schematic plan view;

Fig. 2 shows a side view taken on line II-II of Fig. 1;

Fig. 3 shows an end view on line III-III of Fig. 1;

Fig. 4 shows a side view on line IV-IV of Fig. 1, that is, in opposite direction with respect to the view of Fig. 2;

Fig. 5 shows a perspective view of a pallet having the packs placed thereon, ready for the packaging thereof; and

Fig. 6 shows a diagram of the routes of the mobile members.

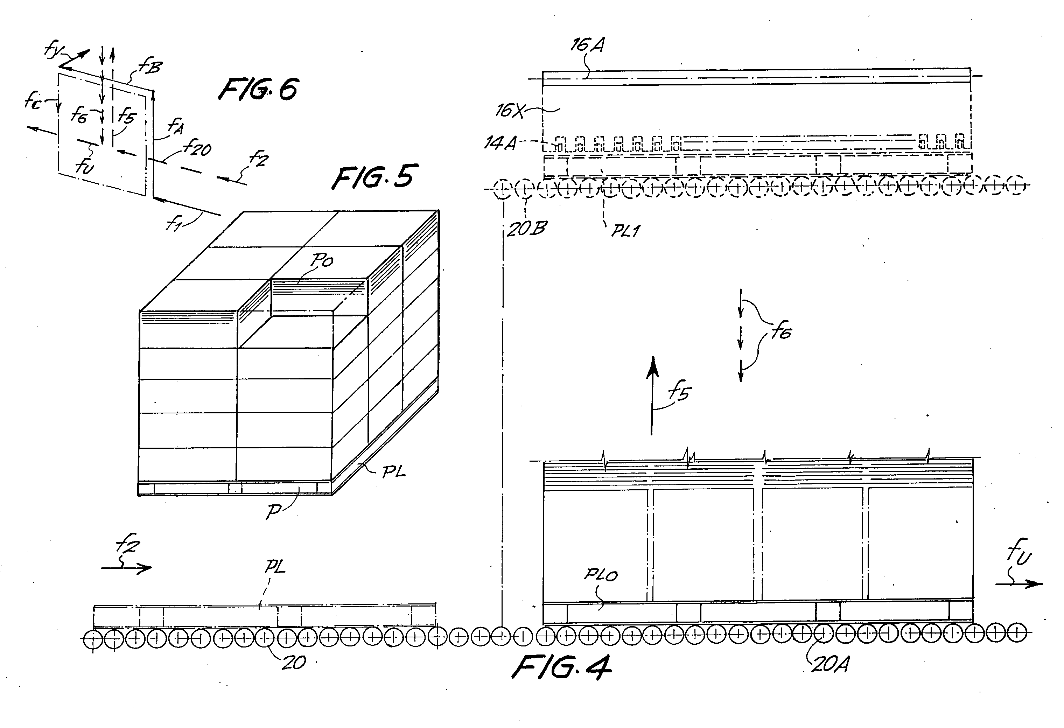

According to what is illustrated in the attached drawing, f1 indicates the direction according to which the articles or packs are fed in order to be collected over a surface or platform or so-called pallet for the packaging thereof. As shown in Fig. 5, PL indicates the plane or so-called pallet onto which the packs P are to be arranged for the formation of a close-packed block on the said pallet. The packs may be superimposed in more piles arranged side- by-side in number of six, for example, as illustrated in Fig. 5. In this figure, Po indicates in chain-dotted line a removed pack.

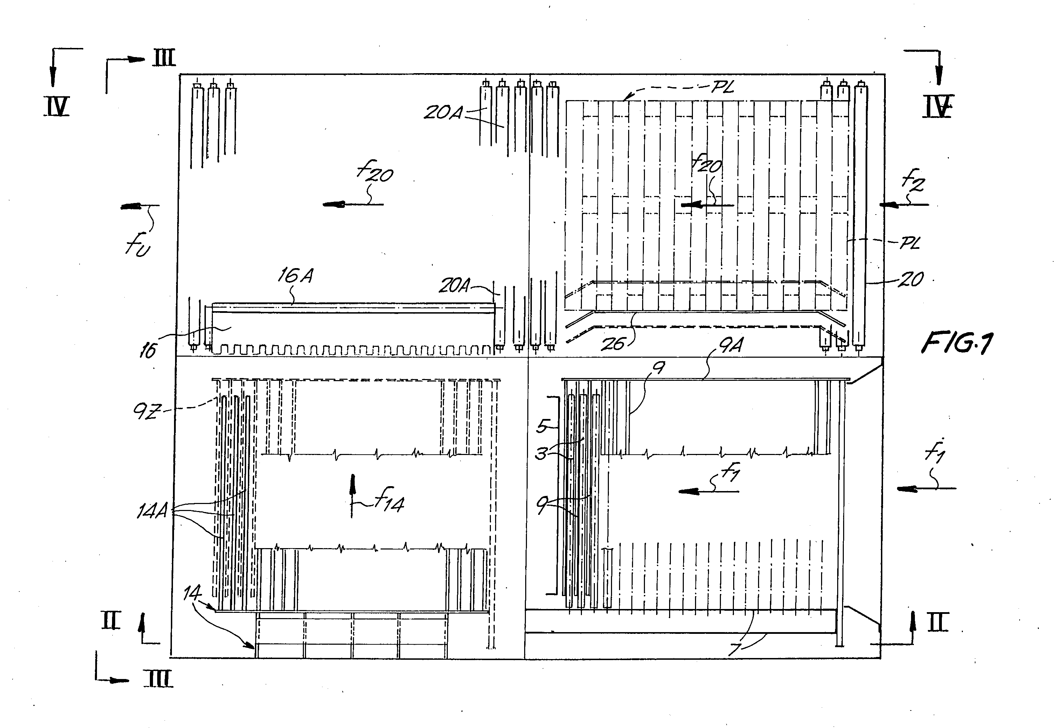

f2 designates the feed direction of the pallet, i.e. the platform PL, which is fed to the apparatus to receive the packs. Arrow fU indicates the exit direction of the pallets which are completed in the apparatus. The packs fed in the direction of arrow f1 in the form of individual layers of packs P are moved forward at the level of a fixed roller table 3, the rollers axis being orthogonal to the direction of arrow f1, and the rollers being slightly spaced apart from one another. At the end of the roller table, in the direction of arrow f1, there is provided a wall 5 for the alignment of the packs of one layer in the direction transverse to the feeding direction indicated by arrow f1. The rollers 3 are cantileverly mounted on a structure 7 provided on the left side of the path along which the packs are forwarded in the direction of arrow f1. Numeral 9 indicates a fork rack whose arms are borne by a structure 9A which is capable of vertical displacements, as the arms 9 of the fork rack are able to pass between the cantileverly mounted rollers 3 of the feeding roller table. In this way the packs disposed in a layer on the roller table and moved close to each other in a direction transverse to the feeding one (i.e. aligned according to the axis of the rollers 3) can be picked up by the cantileverly supported arms 9 of the rack 9, 9A and lifted. For the lifting and the handling of the rack 9, 9A, two loop chains 10 and 12 are provided which form lifting branches 10A and 12A in correspondence of the roller table 3, further horizontal upper branches 10B, 12B able to be displaced in the direction of arrow f1, lowering branches 10C and 12C and horizontal branches 10E, 12E for the return path leading again to the active lifting branches 10A and 12A. Substantially, the racks 9, 9A can perform a cyclic motion, moving always parallel to themselves: they are lifted along the branches 10A, 12A, displaced along the branches 10B, 12B, lowered along the branches 10C, 12C and moved horizontally at the bottom along the return branches 10E, 12E until they reach again the position in correspondence and below the roller table 3 to repeat the cycle along the lifting branches 10A, 12A. Shown in solid line in Fig. 1 at position 9X is a rack 9, 9A which is still below the roller table. 3, ready to withdraw a layer of packs stacked on the said roller table; 9Y indicates (in chain-dotted line) a rack that has completed the lifting strokealong the branches 10A, 12A of chains 10 and 12 and is performing the horizontal stroke along the branches 10B, 12B; 9Z indicates (in chain-dotted line) a position of the rack during the lowering thereof along the branches 10C, 12C of chains 10 and 12; 9W indicates a position of the rack 9, 9A during the horizontal return travel at the bottom along the branches 10E, 12E of the chains, to reach again the position in which it is ready for the lifting, i.e. to reach again the position at the start of the lifting, which is indicated by 9X. The chains 10, 12 can be properly guided by suitable wheels and are suitably guided along the active branches to ensure the support of the rack provided with the cantileverly mounted arms 9. The system may comprise a single rack 9, 9A or two or more racks to speed up the cycle.

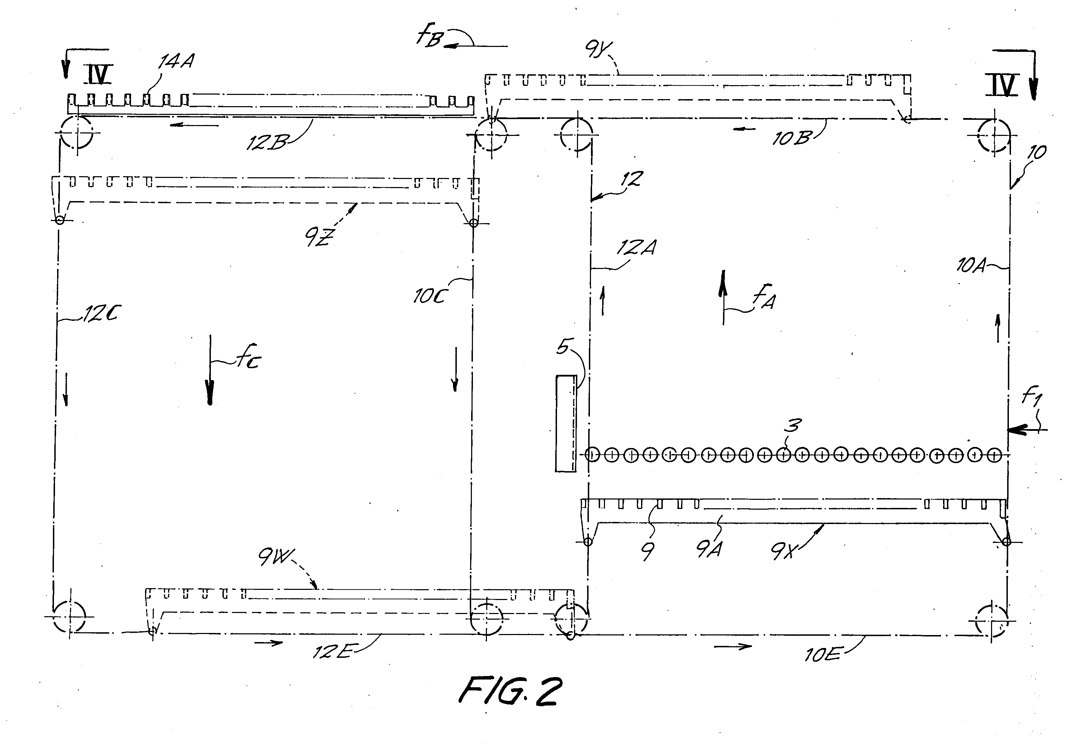

In the view of Fig. 2 the two chains 10 and 12 are partly overlapping, but they may also be disposed side-by-side without overlapping, with the two branches 10C and 12A being close to one another.

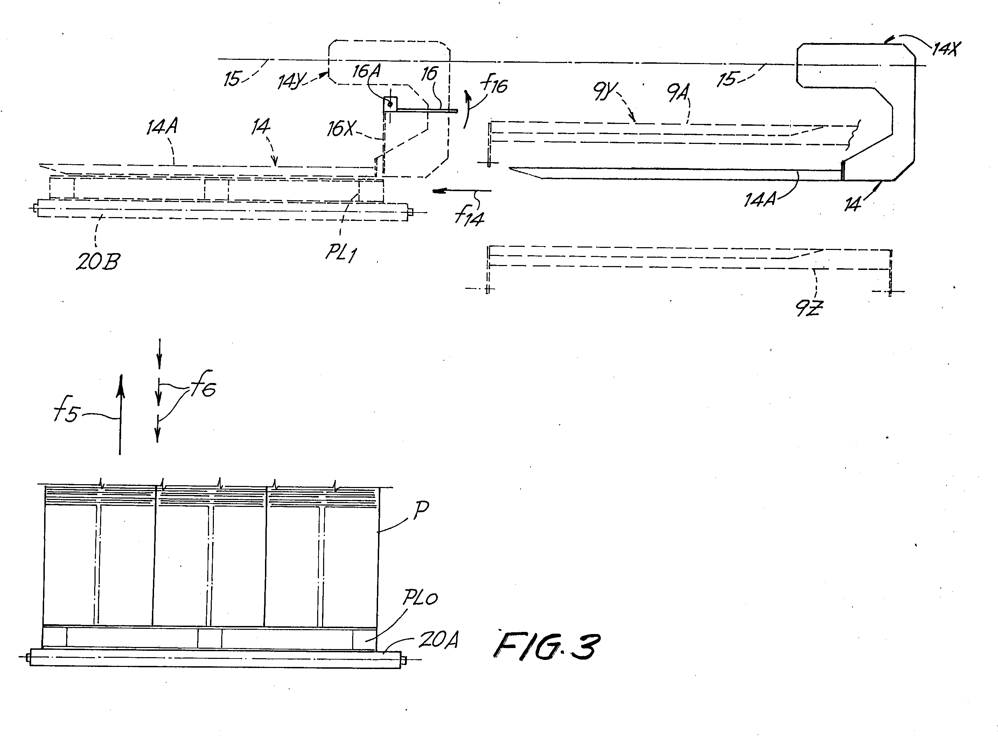

When the rack 9, 9A has completed the lifting along the branches 10A, 12A of the chains and has performed the horizontal translation along the branches 10B, 12B of the said chains, it reaches a position which is indicated by 9Z also in the plan view and is at the beginning of the downwards trajectory along the lowering branches 10C, 12C of chains 10 and 12. In this position, the arms 9 of the rack 9, 9A at the level indicated by 9Y are above the arms 14A of a translation fork 14 which is able to slide along guide means, roughly indicated by 15 which are parallel to the axes of the above described roller tables and of rack arms 9, to move from the position 14X above the racks which ended their the travel along the upper branches 10B, 12B of chains 10, 12, to the position 14Y (see Fig. 3) where they operate in a manner to be described later on. After having performed the travel from position 9Y along the branches 10B, 12B, when these racks start to lower along the branches 10C, 12C, the packs placed thereon are intercepted by the arms 14A of the translation fork 14 which is at position 14X, and remain on these arms 14A in order to be subsequently transferred by translation fork 14 in the direction of arrow f14 from the position 14X to the position 14Y (see Figs. 1 and 3).

Practically, a layer of packs fed in the direction of arrow f1 on the roller table 3, and lined up in transverse rows against the wall 5 owing to the thrust of the rollers of roller table 3 in the direction f1, is firstly lifted up along the branches 10A, 12A of chains 10, 12, i.e. in the direction of arrow fA and, afterwards, it is transferred in the direction of arrow fB owing to the displacement of racks 9, 9A along the chain branches 10B, 12B and then left on the arms 14A of fork 14, 14A at the beginning of the lowering travel of racks 9, 9A in the direction of arrow fC. The layer of packs thus left onto the translation fork 14 is moved by the latter in the direction of arrow f14 up to the position 14Y of said fork.

Along the path of the translation fork 14 in the direction of arrow f14 there is provided a movable barrier 16 pivoted on axis 16A in order to be lifted thereof in the direction of arrow f16 to the horizontal position shown with solid line, said lifted position allowing the transit of packs under said axis 16A in the direction of arrow f14. The barrier 16 may then be lowered to reach the active position 16X where it forms an abutting surface when the translation fork 14 moves back in a direction opposite to arrow f14 to go from position 14Y back to position 14X along a horizontal path. At this point, the packs transferred from said fork 14, 14A in the direction of arrow f14 come in contact with the contrasting barrier 16 at position 16X, which stops them and lines them up in a direction orthogonal to that in which the layer of packs had been lined up by the wall 5 during the first handling step already described. The packs of the layer which is retained by the barrier 16 at position 16X are supported, in a manner described hereinbelow, by a pallet or platform PL shown at PL1 in Fig. 3, and the arms 14A of fork 14 withdraw from below the packs of the layer of packs which is now completely lined-up in the two orthogonal directions. The fork 14 returns to the position 14X ready to receive a new layer from the rack 9, 9A which, from the lifted position 9Y has gone again through the path fB along the chain branches 10B, 12B.

In the position for the feeding of pallets or platforms PL to the apparatus shown at f2, a continuous roller conveyer 20 is provided which receives the platforms PL in the direction of f2 and transfers them to the section 20A of said roller conveyer in the direction of arrow f20 which corresponds to the feeding direction f2 and also to the exit direction fU of the completed pallets. The section 20A of the roller conveyer 20 is mounted on a lifting and lowering facility in such a way as to be able to reach, from the lower position (flush with the roller conveyer 20), the uppermost position 20B and come down again. The roller conveyer section 20A is in particular capable of a rapid lifting in the direction of arrow f5 from the lower position 20A to the position 20B, and of an intermittent lowering in the direction of the set of arrows f6 to go from position 20B of maximum lifting back to position 20B in alignment with the input roller conveyer 20 and at the height of the output fU of the pallets on which the packs have been placed. When a platform or pallet PL must begin to load packs, it reaches, from the feeding position on roller conveyer 20, the lowered position PLo on roller conveyer 20A, and is rapidly lifted in the direction of arrow f5 from said roller conveyer 20A up to the position PL1 mentioned above, in which the same pallet is supported by the roller conveyer 20A at position 20B. Under these conditions, when the translation fork 14, 14A (which feeds the layer of packs in the direction fy) moves back in a direction opposite to fy, it causes said layer to be retained by the barrier at position 16X and laid down on the pallet PL1. Immediately after, the roller conveyer 20A begins a short displacement in the direction of arrow f6 from position 20B with a downward travel of a length corresponding to the height of a layer of packs. It thus follows that, under these conditions, the bearing surface created by the layer of packs previously laid down on the roller conveyer at position 20B, and which has been lowered in the direction f6, lies now at a level just below that of fork 14, 14A. The subsequent translations of fork 14, 14A and releases of subsequent layers of packs PI, cause the subsequent lowerings, in the direction f6, of the roller conveyer 20A from position 20B towards the lower position, until a predetermined number of layers has been loaded on the platform or pallet which moves down from the position PL1 in the direction f6. The platform or pallet and the packs P loaded thereon can then reach, more or less rapidly, the position PLo. Under these conditions, the roller conveyer 20A supports a complete assembly which is formed by a platform PLo and packs P and which is made to exit from the apparatus in the direction of arrow fU.

It should be evident from the above description that the present apparatus has a number of particularly interesting advantages. It can be noted in particular, that the present apparatus allows a substantially continuous supply of packs in the direction of arrow f1, which can be handled in such a way as to obtain a complete alignment of each layer of subsequently fed packs in the two directions. There is also achieved an almost total elimination of lost times as the various synchronized movements allow a substantially continuous cycle without any need to slow down or delay one step to perform the others. The apparatus allows a high handling speed and ensures the compaction and the regular storage of packs which are lined up and compacted against the walls 5 and 16X respectively and are disposed in a given position on the platform, which platform is exactly guided - during its feeding in the directions f2 and f20 - by a side wall 26 which determines its position in one direction, while a suitable optical sensor or similar means allows an exact positioning and an exact stopping at the end of the advancement in the direction of arrow f20 onto the portion 20A of the roller conveyer which is then lifted and re-lowered to receive the layers of packs. The apparatus has limited overall dimensions with respect to others having similar functions.

It is understood that the drawing shows an exemplification given only as a practical demonstration of the invention, as this may vary in the forms and dispositions without nevertheless coming out from the scope of the idea on which the same invention is based. The possible presence of reference numbers in the appended claims has the purpose to facilitate the reading of the claims, reference being made to the description and the drawing, and does not limit the scope of the protection represented by the claims. When no platform or pallet is required, the feeding movement thereof may be suppressed and provision may be made for subsequently tieing or positioning the pallet on the block of articles in order to turn over the whole afterwards.

## Claims

1. An apparatus for the automatic palletization of articles of constant geometric form - such as parallelepiped packs (P) - in layers and possibly on pallets or platforms (PL), characterized in that it comprises in combination: roller conveyer means (20; 20A) or the like for the platforms (PL); means 20A for lifting (f5) said platforms and progressively lowering (f6) them as they are gradually loaded with layers of articles; a roller table (3) for feeding subsequent layers of articles (P); means (9, 9A) for lifting and translating the individual layer; means (14, 14A) for pushing said layer of articles in the transverse direction and leaving it on the lifted platform which can support layers which were previously placed thereon and which were lowered together with the platform, said means (14, 14A) being able to be withdrawn from below said layer; and means for compacting the components of the individual layer.

2. Apparatus according to the preceding claim, characterized in that said means for lifting and translating the individual layer comprise a cantileverly projecting rack-like support (9, 9A) able to pass between the cantileverly supported rollers of a roller table (3), and chains (10,12) driven to move said rack-like support (9, 9A) vertically and horizontally.

3. Apparatus according to any preceding claim, characterized in that said means (14, 14A) for transversally pushing the lifted layer of articles comprise a translation fork (14, 14A) having projecting arms (14A) which intersect the downwardly moving rack support (9, 9A) to pick up the lifted and translated layer of articles.

4. Apparatus according to any preceding claim, characterized in that the means for compacting the components of an individual layer comprise a wall (5) acting on the arrival of the fed components, and a barrier (16) able to intervene - especially by rotation - upon reversal of the motion of the translation fork (14, 14A), after the transfer of said layer in the transverse direction.

5. Apparatus according to any preceding claim, characterized in that the means for lifting and lowering a platform (PL) consist of a portion of roller conveyer (20A) which provides also for moving away the loaded platform (PL).

6. Apparatus for automatic palletization; all as above described and represented for exemplification in the attached drawing.

FIG.1

FIG. 2

EP 0 506 630 A1

FIG.3

FIG.6

FIG.5

FIG.4

EP 0 506 630 A1

**European Patent Office**

## EUROPEAN SEARCH REPORT

Application Number

EP    92 83 0146

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 551 448 (ENZINGER-UNION-WERKE) | 1,2,5 | B65G57/24 |
| A | * page 7, line 15 - page 8, line 1; figures 1,2,5 * | 3,4 | |
| A | FR-A-2 573 401 (LYCEE TECHNIQUE D'ETAT INDUSTRIEL DE BREST) * page 4, line 4 - page 5, line 3; figures 1-8 * | 1-4 | |
| A | DE-A-2 500 077 (BERNHARD BEUMER MASCHINENFABRIK) * page 21, last paragraph - page 22, line 3; figures 1,3,5 * | 1-3,5 | |
| A | DE-A-2 757 161 (LUX SYSTEMTECHNIK) * page 7, last paragraph - page 9, line 2 * * page 10, line 8 - line 11; figures 1-6 * | 1,4 | |
| A | US-A-4 214 848 (VERWEY ET AL.) * abstract; figures 1-7 * | 1 | |

TECHNICAL FIELDS
SEARCHED (Int. Cl.5)

B65G

The present search report has been drawn up for all claims

| Place of search | Date of completion of the search | Examiner |
|---|---|---|
| THE HAGUE | 25 JUNE 1992 | NEVILLE D.J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document